# EUROPEAN PATENT SPECIFICATION

(11) **EP 1 916 566 B1**
(45) Date of publication and mention of the grant of the patent: **17.11.2010**
(21) Application number: 07019167.1
(22) Date of filing: 28.09.2007
(51) Int. Cl.: G03B 5/00, G02B 27/64, H04N 5/225, H04N 5/232

(54) **Image blurring correction unit, image blurring correction apparatus, and imaging apparatus**
Einheit zur Korrektur der Bildunschärfe, Vorrichtung zur Korrektur der Bildunschärfe und Abbildungsvorrichtung
Unité de correction de flou d'image, appareil de correction de flou d'image et appareil de formation d'images

(30) Priority: 29.09.2006 JP 2006269713
(43) Date of publication of application: 30.04.2008
(73) Proprietor: Fujinon Corporation, Saitama-shi, Saitama (JP)
(72) Inventor: Sekino, Shizuo, Kita-ku Saitama-shi Saitama (JP)
(74) Representative: Klunker, Hans-Friedrich

(56) References cited:
- JP-A- 7 274 056
- JP-A- 2002 236 248
- JP-A- 2005 326 807
- JP-A- 2006 215 095
- JP-A- 2006 243 704
- JP-A- 2008 003 131
- US-A- 5 748 995

## Description

### Background of the Invention

### 1. Field of the Invention

The present invention relates to an image blurring correction unit suitably for use as a camera shake correction in an imaging apparatus, for example, a digital camera and a camera-equipped cell-phone, an image blurring correction apparatus including the image blurring correction unit, and an imaging apparatus having the image blurring correction apparatus.

### 2. Description of the Related Art

Hitherto, digital cameras or the like have employed various camera shake correction mechanisms so as to prevent a disturbance of a photographed image from being caused by a user' s hand trembling or the like (see JP7-2740564, JP2005-326807 and Japanese Patent No. 26123718 published also as JP 4 072 878 A).

Some of such camera shake correction mechanisms have employed what is called a gimbal mechanism so that a holding module can turn in a pitching direction and in a yawing direction.

However, in the case of the gimbal mechanism disclosed in JP7-274056A, it is necessary to dispose rotary joints or the like at four places on the left, right, top and bottom sides of the holding module, respectively. Inevitably, the camera shake correction mechanism tends to increase the size thereof. This camera shake correction mechanism has a drawback that in a case where the size of the camera shake correction mechanism is forcibly reduced, bearings and so on of the rotary joints become fragile.

### Summary of the Invention

Thus, in order to eliminate the drawback, the following drive structure has been devised (see Japanese Patent Application No. 2006-169871, published as JP 2008-3131A). That is, an outer frame is placed to surround the holding module that holds the lens. An axial point serving as a point along the outer periphery of the outer frame is swingably supported. The outer frame is driven through a first drive point and a second drive point, which are apart from the axial point in first and second directions differing from each other, respectively.

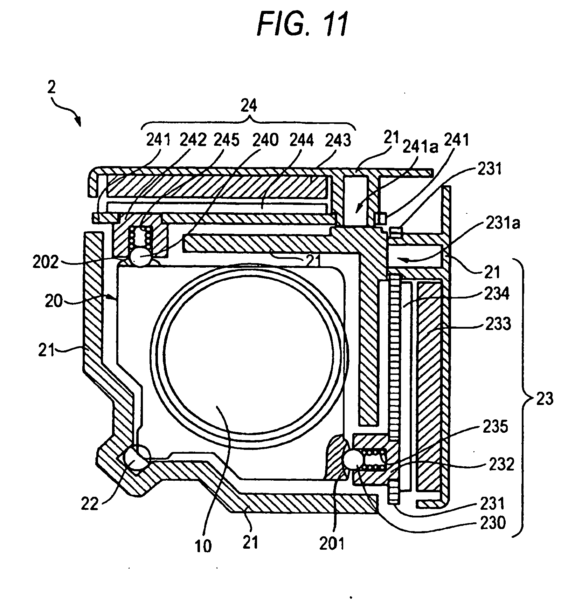

FIG. 11 illustrates an image blurring correction unit to which the related-art drive structure is applied.

FIG. 11 is a front view illustrating an image blurring correction unit 2. FIG. 11 shows the image blurring correction unit 2 including the following components, that is, a holding module 20 that holds an imaging lens 10, an outer frame 21 placed to surround the holding module 20, a first drive portion 23 provided on the left-side surface of the holding module 20 to enable the holding module 20 to turn in a yawing direction, a second drive portion 24 provided on the top surface of the holding module 20 to enable the holding module 20 to turn in a pitching direction, a supporting point 22 for supporting the holding module 20 to enable the holding module 20 to swing in the pitching direction and the yawing direction with respect to the outer frame 21, a first spherical engaging portion 201 provided at a part of the holding module 20 to be engaged with the first drive portion 23 through a first spherical element 230 to be described later, and a second spherical engaging portion 202 provided to be engaged with the second drive portion 24 through a second spherical element 240 to be described later.

The first drive portion 23 consists of a first coil 234, a first magnet 233, a first support member 231 which supports the first coil 234 and which is supported turnably with respect to the outer frame 21, and a first groove portion 232 which is fixed to an end part of the first support member 231 and which supports the holding module 20 by pressing the first spherical element 230, which is pushed into a groove formed in the first groove portion 232 and is placed on a first spring 235, against the first spherical engaging portion 201 provided at the part of the holding module 20.

The second drive portion 24 consists of a second coil 244, a second magnet 243, a second support member 241 which supports the second coil 244 and which is supported turnably with respect to the outer frame 21, and a second groove portion 242 which is fixed to an end part of the second support member 241 and which supports the holding module 20 by pressing the second spherical element 240, which is pushed into a groove formed in the second groove portion 242 and is placed on a second spring 245, against the second spherical engaging portion 202 provided at the part of the holding module 20.

The first coil 234, which is a winding coil formed by winding a wire in a flat shape, is fixed to the first support member at the right side of the holding module 20, as viewed in FIG. 11. The first magnet 233, which is magnetized so that two regions obtained by dividing the first magnet 233 thereinto anteroposteriorly in an optical axis of the imaging lens 10 have different magnetic polarities, is fixed to a position that faces the first coil 234 and that is located on the inner wall of the right-side surface of the outer frame 21. The holding module 20 is turned, together with the first coil 234 and the support member fixed to the first coil 234, in the yawing direction by the electromagnetic-force interaction between the first coil 234 and the first magnet 233.

A second coil 244, which is a winding coil formed by winding a wire in a flat shape, is fixed to a second support member 241 above the holding module 20. The second magnet 243, which is the same type as that of the first magnet 233 and is magnetized so that two regions obtained by dividing the second magnet 243 thereinto anteroposteriorly in an optical axis of the imaging lens 10 have different magnetic polarities, is fixed to a position that faces the second coil 244 and that is located on the inner wall of the right-side surface of the outer frame 21. The holding module 20 is turned, together with the second coil 244 and the support member fixed to the second coil 244, in the pitching direction by the electromagnetic-force interaction between the second coil 244 and the second magnet 243.

According to the image blurring correction unit illustrated in FIG. 11, the holding module 20 can be swung and the optical axis of the imaging lens 10 can be directed in an optional direction by causing the first drive portion 23 to turn the holding module 20 together with the outer frame 21 in the yawing direction around the axial point 22 provided at one point along the outer periphery of the outer frame 21 and simultaneously causing the second drive portion 24 to turn the holding module 20 together with the outer frame 21 in the pitching direction around the axial point 22, without driving the holding module by providing rotary shafts at four places on the left, right, top and bottom sides of the holding module, respectively, similarly to the related-art camera shake correction unit.

However, in the case of the structure illustrated in FIG. 11, the outer shape of the image blurring correction unit is restricted by the outer frame 21 provided to surround the holding module 20. Thus, the size of the image blurring correction unit cannot quite satisfactorily be reduced. If the outer frame can be eliminated, the size of the image blurring correction unit can further be reduced. Also, flexibility can be given to the layout of the inside of a portable device into which the image blurring correction unit is incorporated.

In view of the aforementioned circumstances, an object of the invention is to provide an image blurring correction unit which is further reduced in size by eliminating the outer frame, to provide an image blurring correction apparatus having this image blurring correction unit, and to provide an imaging apparatus having this image blurring correction apparatus.

To achieve the foregoing object, according to an aspect of the invention, there is provided an image blurring correction unit (hereunder referred to as a first image blurring correction unit of the invention), comprising a holding module that holds a lens; a support member having a support portion that holds the holding module at an axial point so as to be swingable about this part in two directions, the axial point being one point along an outer periphery of the holding module; and two drive mechanisms that drive the holding module through first and second drive points, which are apart from the axial point in first and second directions differing from each other, respectively, the two drive mechanisms comprising: a first drive mechanism that turns the holding module, through the first drive point, around a first axis connecting the axial point to the second drive point; and a second drive mechanism that turns the holding module, through the second drive point, around a second axis connecting the axial point to the first drive point, wherein the support member further comprises a first wing portion and a second wing portion that are interposed by the support portion and extend in the first direction and the second direction, respectively, and that hold the first drive mechanism and the second drive mechanism, respectively.

According to the image blurring correction unit of the invention, the support member has the support portion and also has a first wing portion and a second wing portion that are interposed by the support portion and extend in the first direction and the second direction, respectively, and that have the first drive mechanism and the second drive mechanism, respectively.

That is, the support portion provided in the outer frame in the related-art structure illustrated in FIG. 11 is provided in the support member of the image blurring correction unit according to the invention. Also, the first wing portion and the second wing portion, which extend from the support portion in the first direction and the second direction, respectively, are provided in the image blurring correction unit according to the invention. The first drive portion and the second drive portion are held by the first wing portion and the second wing portion, respectively.

Thus, all of the support portion, which is provided at the side of the outer frame in the related-art unit, and the first wing portion and the second wing portion, which respectively hold the first drive portion and the second drive portion, are provided at the side of the support member. Consequently, the outer frame having the support portion, which is provided in the related-art unit illustrated in FIG. 11, is eliminated.

Preferably, the holding module further holds an image sensor, the image sensor capturing light from an object and generating an image signal.

In a case where the holding module holds only the lens, a structure for holding an image sensor at a rear end portion of the holding module is additionally needed. In a case where the holding module holds the lens and an image sensor, a holding portion for the image sensor is omitted. Thus, the size of the holding module can further be reduced.

Preferably, the first drive point and the second drive point are formed at locations so that the second axis connecting the first drive point to the axial point intersects with the first axis connecting the second drive point to the axial point at an angle of substantially 90°.

Thus, the holding module can be put into various positions by driving the holding module using the first axis and the second axis as drive axes that are independent of each other. Consequently, in a case where an image blurring correction apparatus having this image blurring correction unit and a blurring detection sensor is constructed, the holding module can be adjusted to any position according to a blurring detected by the blurring detection sensor so that the detected blurring is eliminate.

Preferably, each of the two drive mechanisms comprises: a magnet that forms a magnetic field; and a coil that is placed in the magnetic field and is energized to generate a force of turn-driving the holding module.

In the case of using what is called a voice coil motor having the magnet, which forms a magnetic field, and the coil placed in the magnetic field and is energized to generate a force of turn-driving the holding module, both of the first drive portion and the second drive portion can be miniaturized. Consequently, the invention can obtain a larger effect in miniaturizing the entire image blurring correction unit.

It is preferable that the holding module has a spherical convex portion at the axial point, and the support member has a spherical concave surface which is formed in the support portion and is adapted to receive the spherical convex portion.

Thus, the structure of the bearing portion is simplified and miniaturized. Consequently, the invention can obtain a larger effect in miniaturizing the entire image blurring correction unit.

It is preferable that the holding module has a spherical convex portion at each of the first drive point and the second drive point, each of the first drive mechanism and the second drive mechanism has a spherical concave portion which receives an associated one of the convex portions respectively provided at the first drive point and the second drive point, and each of the first drive mechanism and the second drive mechanismprovides a drive force to an associated one of the convex portions through an associated one of the concave portions.

Thus, each of the drive points serves also as a bearing portion. Accordingly, the structure is simplified. Consequently, the invention can obtain a larger effect in miniaturizing the entire image blurring correction unit.

It is preferable that each of the magnets of the first drive mechanism and the second drive mechanism is fixedly supported by an associated one of the first wing portion and the second wing portion, each of the coils of the first drive mechanism and the second drive mechanism is supported, movably in a direction of an optical axis of the lens, by an associated one of the first wing portion and the second wing portion of the support member, and each of the coils is energized to generate a force acting in the direction of the optical axis.

Thus, the magnet and the coil, which are principal members of each of the first drive mechanism and the second drive mechanism, are concentrated in and supported by an associated one of the first wing portion and the second wing portion. Thus, the first drive mechanism and the second drive mechanism, consequently, the support member can be miniaturized.

To achieve the foregoing object, according to another aspect of the invention, there is provided an image blurring correction apparatus (hereunder referred to as an image blurring correction apparatus of the invention) comprising the first image blurring correction unit of the invention; a blurring detection portion that detects blurring, and a blurring control portion that causes the two drive mechanisms to turn-drive the holding module according to a result of detection by the blurring detection portion.

To achieve the foregoing object, according to still another aspect of the invention, there is provided an imaging apparatus comprising the image blurring correction apparatus of the invention. The imaging apparatus features that the imaging apparatus generates image data representing an image, in which blurring is reduced, by capturing light from an object and by causing the image blurring correction apparatus to operate.

### Brief Description of the Drawings

FIG. 1 is a perspective view illustrating, from obliquely above, an external appearance of a digital camera employing an embodiment of an image blurring correction unit according to the invention;
FIG. 2 is a rear view illustrating the digital camera shown in FIG. 1;
FIG. 3 is a functional block view illustrating the digital camera shown in FIGS. 1 and 2;
FIG. 4 is a view illustrating an embodiment of an image blurring correction unit according to the invention;
FIG. 5 is a view illustrating a support structure for a coil 234A, 244A;
FIG. 6 is an exploded view illustrating the image blurring correction unit shown in FIG. 4;
FIGS. 7A, 7B, and 7C are views illustrating how a flexible substrate 200A is drawn out of a holding module 20A;
FIG. 8 is a perspective view illustrating, from frontwardly and obliquely above, a state in which a support member 21A provided in an image blurring correction unit 2A of a configuration illustrated in FIGS. 7A to 7C is fixed to a support portion BASE in a portable device;
FIGS. 9A, 9B, 9C, and 9D are views illustrating an operation of the image blurring correction unit 2A;
FIGS. 10A and 10B are views illustrating the configuration of a camera-equipped cell-phone to which the image blurring correction unit 2A is applied; and
FIG. 11 is a view illustrating an example of the related-art image blurring correction apparatus.

### Detailed Description of the Invention

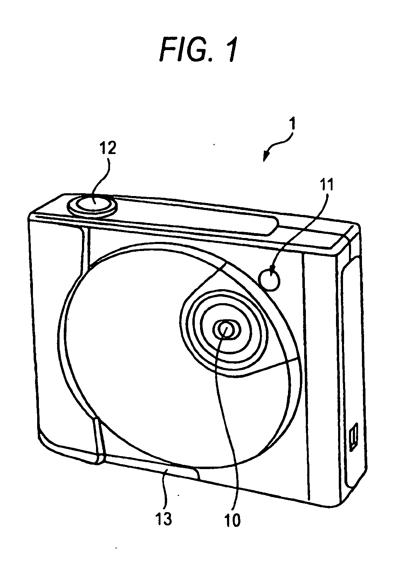

Hereinafter, preferred embodiments of an image blurring correction unit and an image blurring correction apparatus having the image blurring correction unit according to the invention are described in detail with reference to FIGS. 1 to 9D. Incidentally, the embodiments described below are specific examples of the image blurring correction unit and the image blurring correction apparatus having the image blurring correction unit according to the invention. Therefore, various preferable technical limitations are applied to the embodiments. However, unless a description of specifically limiting the invention is made in the following description, the scope of the invention is not limited to the embodiments.

FIG. 1 is a perspective view illustrating, from obliquely above, an external appearance of a digital camera employing an embodiment of an image blurring correction unit according to the invention.

A digital camera shown in FIG. 1 is a compact autofocus camera on which an example of an image blurring correction unit according to the invention and an example of an image blurring correction apparatus having the image blurring correction unit according to the invention are mounted. An imaging lens 10 and a finder window 11 are provided in the front of the digital camera shown in FIG. 1. A release switch 12 is provided on the top surface of the digital camera. FIG. 1 illustrates also a lid 13 through which batteries and recording media are output and input.

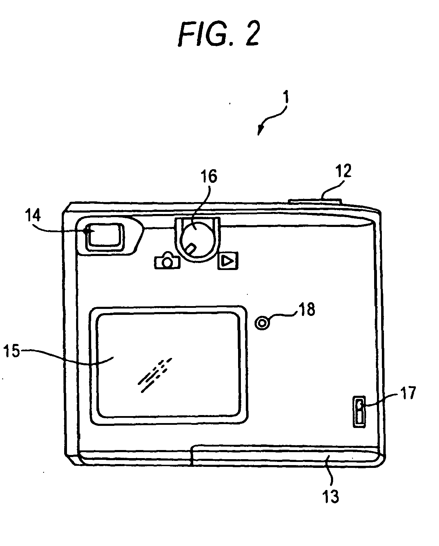

FIG. 2 is a rear view illustrating the digital camera shown in FIG. 1.

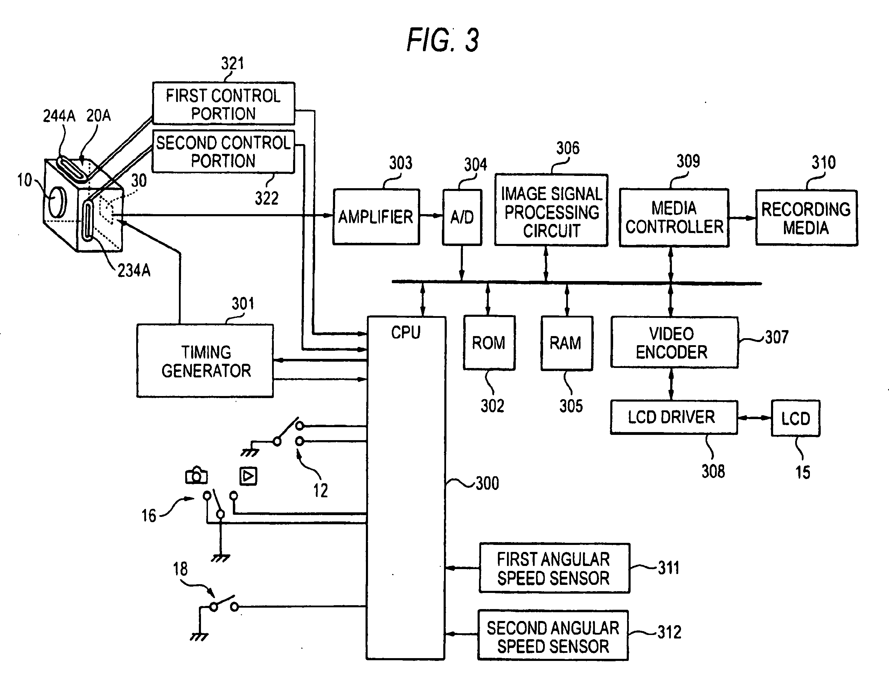

A finder 14, a liquid crystal display screen 15, a mode switch knob 16 which is operated when an operating mode of the digital camera 1 is changed, and a power-supply switch 17 are provided on a rear surface of the digital camera shown in FIG. 2. The operating mode of the digital camera 1 includes an imaging mode, in which an image of an object is taken, and a reproducing mode in which an image recorded on a nonvolatile RAM 305 (see FIG. 3) is displayed on a liquid crystal display screen 15.

FIG. 2 shows an "OK/Cancel" button 18 which is operated when it is determined whether a taken image displayed on the liquid crystal display screen 15 is recorded on the RAM 305 just after the image is taken.

FIG. 3 is a functional block view illustrating the digital camera.

A control program for controlling the digital camera 1 is stored in a ROM 302 shown in FIG. 3. The control program is started by turning on the power-supply switch 17 (see FIG. 1).

In a case where the mode switch knob 16 is turned to the side of a "mark representing a camera" depicted on the rear surface of the digital camera 1, that is, turned to the imaging mode when the power-supply switch 17 is turned on in the digital camera 1, an image of the object is formed on the image sensor 30 from light passing through the imaging lens 10 from the object. Then, the image of the object is displayed on the liquid crystal display screen 15. Hereinafter, an operation of the digital camera 1 from the incidence of light coming from an object into the digital camera 1 to the indication of a through-image on the liquid crystal display screen (hereunder referred to as the "LCD") 15 is described, together with each of components of the digital camera 1.

The holding module 20 shown on a leftwardly upward part of FIG. 3 holds the imaging lens 10 and the image sensor 30. After light from an object passes through the imaging lens 10, an image is formed on the image sensor 30. Then, a timing generator 301 receives an instruction from a CPU 300 and drives the image sensor 30. Thus, an analog image signal corresponding to an image of the object, which is formed on the image sensor 30, is output from the image sensor 30. The analog image signal output from the image sensor 30 is amplified by an amplifier 303. Subsequently, the amplified signal is converted by an A/D converter 304 into digital image data. Then, the digital image data is once stored in the RAM 305. The digital image data once stored in the RAM 305 is read therefrom by an image signal processing circuit 306. Image signal processing is performed on the digital image data. The processed digital image data is converted into an analog image signal by a video encoder 307. Thus, an image represented by this analog image signal is displayed in the LCD 15 through an LCD driver 308. Incidentally, an operation in the case of turning the mode switch knob 16 to the reproducing mode does not relates directly to the invention. Therefore, a description of this operation is omitted.

Next, an imaging operation of the digital camera 1 is described below. Incidentally, the following description is made by assuming that the mode switch knob 16 is set to the imaging mode, and that a through-image is displayed on the LCD 15.

When a desired composition is obtained through the finder 14 or the LCD 15, a photographer slightly depresses the release switch 12 (hereunder, this state is referred to as a "half-depression") . In response to this operation, a focusing operation of moving the imaging lens 10 in the direction of an optical axis thereof is performed according to an instruction from the CPU 300. Subsequently, the photographer further depresses the release switch 13 which has been in the half-depression state (hereunder, a state, in which the release switch 13 is further depressed from the half-depression state, is referred to as a "full-depression state"). Then, an image of the object is taken by performing an operation described in the following description.

First, an initial operation, such as discharging of each pixel in the image sensor 30, is performed with timing with which full-depression is performed. Subsequently, the exposure of light from the object to the image sensor 30 for a predetermined exposure time, while a deviation of the optical axis of the imaging lens 10 is performed. When the exposure time has elapsed, an analog image signal is output from the image sensor 30, as above described. Then, the analog image signal is sent to the amplifier 303 which amplifies the analog image signal. Subsequently, the image signal amplified by the amplifier 303 is converted by an A/D portion 304 into a digital image signal. The converted image signal is once stored in the RAM 305. Thereafter, image data represented by the digital image signal stored in the RAM 305 is read therefrom and is supplied to the LCD driver 308. An taken image is displayed on the screen of the LCD 15, instead of the through-image. When the "OK/Cancel button 18" is operated in this state so as to select "OK", the taken image is recorded in a recording media 310 through a media controller 309. In the case of selecting "Cancel", the image data stored in the RAM 305 is deleted. Upon completion of such processing, the through-image is displayed again on the screen of the LCD 15.

Hereinafter, a camera shake correction apparatus provided in the digital camera 1 is described in detail.

As illustrated in FIG. 3, a first angular speed sensor 311 for detecting an angular speed in what is called the pitching direction, and a second angular speed sensor 312 for detecting an angular speed in what is called the yawing direction perpendicular to the pitching direction are provided in the digital camera 1. Each of the first angular speed sensor 311 and the second angular speed sensor 312 outputs a signal corresponding to a detected angular speed.

In the digital camera 1, within a predetermined time since a moment at which the full-depression of the release switch 12 is performed, the CPU 300 determines deviation amounts respectively corresponding to the pitching direction and the yawing direction according to signals output respectively from the first angular speed sensor 311 and the second angular speed sensor 312. Because a method of determining the deviation amount utilizing the angular speed sensor is a known technique, the description of such a method is omitted.

The CPU 300 sends signals representing the detected deviated amounts to a first control portion 321 and a second control portion 322 illustrated in FIG. 3, respectively.

Camera shake correction according to the signal corresponding to the deviation amount is performed by directing the optical axis of the imaging lens 10 held by the holding module 20, that is, the orientation of the holding module 20 toward a direction in which the detected deviation is canceled.

The first control portion 321 and the second control portion 322 controls the orientation of the holding module 20 according to the orientation and the magnitude of electric current supplied to the first coil 234 and the second coil 244 which is of the same type as that of the first coil 234.

Hereinafter, an embodiment of the structure of an image blurring correction unit 2A according to the invention is described.

In the holding module 20 of the structure illustrated in FIG. 11, the outer frame 21 is provided to surround the holding module 20. Accordingly, the image blurring correction unit 2 cannot further be miniaturized, due to limitations to the outer shape of the outer frame 21. According to the present embodiment, the image blurring correction unit 2 can further be miniaturized by eliminating the outer frame and adapting a support member 21A to serve as both of the related-art outer frame and the related-art support member.

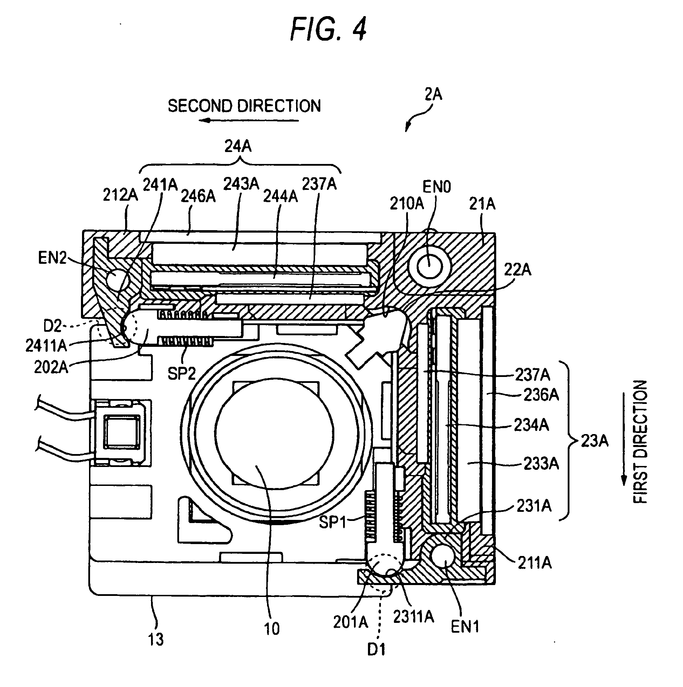

FIG. 4 is a view illustrating an embodiment of the image blurring correction unit 2A according to the invention, which is provided in the digital camera 1 shown in FIGS. 1 and 2. For comparison with those of the related-art image blurring correction unit 2 shown in FIG. 11, each of components shown in FIG. 4 is designated with a reference numeral including the same reference character as that of an associated component of the related-art image blurring correction unit 2 shown in FIG. 11 and also including a character A which is added just posterior to the reference character and which indicates that the associated component shown in FIG. 4 is an improved one.

FIG. 4 is a front view of the image blurring correction unit 2A according to the present embodiment. FIG. 4 illustrates components of the image blurring correction unit 2A, that is, a first drive portion 23A provided in the right-side surface of the holding module 20A so as to enable the holding module 20A to turn in the yawing direction, a second drive portion 24A provided in the top surface of the holding module 20A so as to enable the holding module 20A to turn in the pitching direction, an axial point 22A for supporting the holding module 20A swingably in the pitching direction and in the yawing direction, a first drive point D1 which is provided in a part of the holding module 20A and which engages with a concave portion 2311A of a first arm 231A provided in the fist drive portion 23A through a spherical convex portion 201A, and a second drive point D2 similarly engaging with a concave portion 2411A of a second arm 241A provided in the second drive portion 24A through a spherical convex portion 202A. As described above, the holding module 20A of the present embodiment holds the lens 10 and the image sensor for capturing light from an object and for generating an image signal.

The structure of the image blurring correction unit 2A is briefly described below with reference to FIG. 4.

First, the image blurring correction unit 2A is provided with the support member 21A having a support portion 210A supporting the holding module 20A shown in FIG. 4 at the axial point 22A, which is a point along the outer periphery of the holding module 20A, so that the holding module can swing in an optional direction. The support portion 210A of the support member 21A has a spherical concave surface with which the convex portion formed at the axial point 22A of the holding module 20A engages.

Further, the support member 21A has a first wing portion 211A and a second wing portion 212A, which are intervened by the support portion 210A and respectively extend in the first direction and the second direction. As is seen from FIG. 4, in this example, the first drive point D1 and the second drive point D2 are formed at places so that a second axis connecting the first drive point D1 to the axial point 22A to determine the first direction intersects with a first axis connecting the second drive point D2 to the axial point 22A to determine the second direction at an angle of substantially 90°. A part, at which the convex portion 201A and the concave portion 2311A constituting the drive point D1 are contact with each other, and a part, at which the convex portion 202A and the concave portion 2411A constituting the drive point D2 are contact with each other, employ a structure, which elastically presses the convex portion 201A against the concave portion 2311A by a compression spring SP1, and a structure, which elastically presses the convex portion 202A against the concave portion 2411A by a compression spring SP2.

Hereinafter, the configurations of the two drive mechanisms 23A and 24A are described with reference to FIG. 4.

Each of magnets 233A and 243A, which generate magnetic fields and are supported by the support member 24A, and an associated one of coils 234A and 244A, which are placed in the magnetic fields and generate forces of turn-driving the holding module 20A by being energized, are provided in the two drive mechanisms 23A and 24A, respectively. Each of the magnet 233A of the first drive mechanism 23A and the magnet 243A of the second drive mechanism 24A is fixedly supported by the support member 21A. Each of the coil 234A of the first drive mechanism 23A and the coil 244A of the second drive mechanism 24A is supported movably in the direction of the optical axis of the lens 10A (i.e., a direction perpendicular to a surface of paper, on which FIG. 4 is illustrated, by the support member 21A) by the support member 21A and generates a force acting in the direction of the optical axis of the lens 10A by being energized. In this example, as described above, each of the coils 234A and 244A is attached to an associated one of the two arms 231A and 241A respectively provided at the first wing portion 211A and the second wing portion 212A of the support member 21A. The magnets 233A and 243Aare provided therein to face the coils 234A and 244A, respectively. Thus, each of the coils 234A and 244A is movably supported by the support member 21A.

A support structure for each of the coils 234A and 244A, which is employed by the drive mechanism according to the present embodiment so as to enable an associated one of the coils 234A and 244A to generate a maximum force, is described below. The two drive mechanisms have the same configuration. Thus, the structure of one of the drive mechanisms 23A is described below.

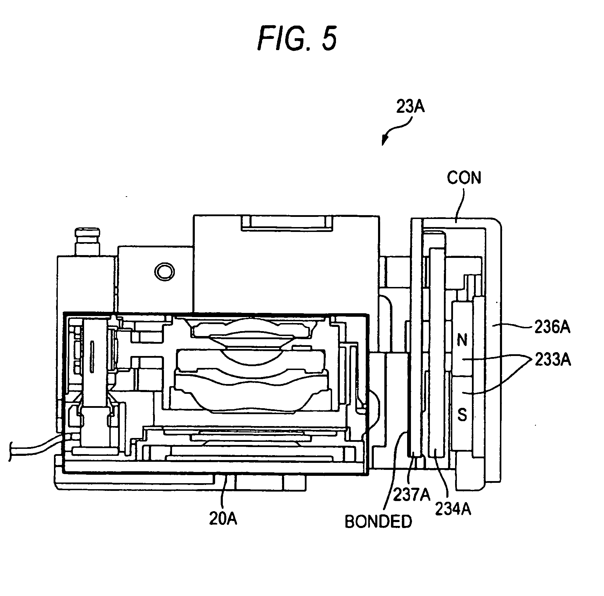

FIG. 5 is view illustrating the support structure for the coil 234A.

As illustrated in FIG. 5, a pair of yokes 236A and 237A, to one of which the magnet 233A is fixed, are provided in the structure for supporting the coil 234A. This pair of the yokes 236A and 237A is compact. Thus, a mounting portion for mounting this pair of the yokes is not provided thereon. The paired yokes 236A and 237A are bonded to the support member 21A by an adhesive agent, and are incorporated thereinto.

The entire pair of the yokes 236A and 237A has a pair of parallel plates which sandwich the magnet 233A and the coil 234A, and a connecting plate CON for connecting associated sides of the pair of parallel plates. Thus, the structure is constituted by a cross-sectionally substantially-U-shaped member that accommodates the magnet 233A and the coil 234A, as a whole. In this example, the paired yokes 236A and 237A are divided into two members shaped to be fit to each other in the vicinity of an end portion of the connecting plate CON.

The paired yokes 236A and 237A divided into two members in this way are employed. Thus, one 237A of the paired yokes 236A and 237A is incorporated into the mechanism earlier than the other yoke, using an adhesive agent. Then, the magnet 233A and the coil 234A are incorporated thereinto. Subsequently, the other yoke 236A is incorporated thereinto by being fit into the yoke 237A. Consequently, the drive mechanism can easily be assembled.

With the configuration shown in FIG. 5, even in a case where a magnetic force generated due to the magnetic field formed by both the magnet 233A and the coil 234A is stronger than the bonding strength of the bonding part between the yoke 237A and the support member21A after the drive mechanism is assembled, the paired parallel plates are supported by the connecting plate CON. Thus, the inclination of the yoke is not caused.

Referring back to FIG. 4, the components other than the yokes 236A and 237A of the drive mechanism are described below.

When the coils 234A and 244A are not supported by the support member 21A movably, the coils 234A and 244A do not directly support the support member 21A. As described above, the two arms 231A and 241A are provided at the first wing portion 211A and the second wing portion 212A, respectively. The coils 234Aand244Aare attached to the arms 231A and 241A, respectively, and support the two arms 231A and 241A so that the arms 231A and 241A can move in the direction of the optical axis.

When the two arms 231A and 241A are provided thereat movably in the direction of the optical axis, a connecting rod EN0 extending in the direction of the optical axis of the lens 10 is provided in the vicinity of the support portion 210A of the support member 21A. Connecting rods EN1 and EN2, which extend in the direction of the optical axis of the lens 10, are provided at an end part of the first wing portion 211A and at an end part of the second wing portion 212A, respectively. Among the three connecting rods EN0, En1, and EN2, the connecting rod EN0 provided in the vicinity of the support portion supports both the two arms 231A and 241A. End portions of the two arms 231A and 241A are supported by the remaining rods EN1 and EN2, respectively. Thus, the arms 231A and 241A are supported movably in the direction of the optical axis, together with the coils 234A and 244A attached to the arms 231A and 241A.

Therefore, the two drive mechanisms 23A and 24A can cause the holding module 20 to turn through the first drive point D1 around the first axis connecting the axial point 22A to the second drive point D2 and to turn through the second drive point D2 around the second axis connecting the axial point 22A to the first drive point D1.

In the case of configuring the drive mechanisms, similarly to the present embodiment, the first drive portion 23 and the second drive portion 24 are concentratively supported at the wing portions 211A and 212A of the support member 21A, respectively. Consequently, each of the drive mechanisms becomes compact, as a whole.

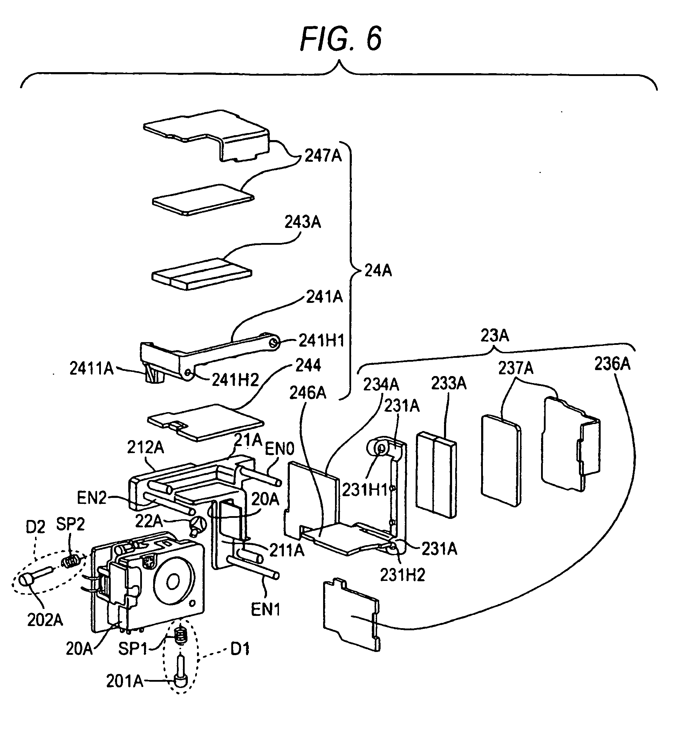

The structure of each of the members of the image blurring correction unit 2A is described hereinafter in detail by referring to FIG. 6 which is an exploded view.

FIG. 6 is an exploded view illustrating the image blurring correction unit 2A shown in FIG. 4.

The holding module 20A, which has the lens and the image sensor, is shown at a leftwardly downward part of FIG. 6. A spherical convex portion is formed at the axial point 22A which is one point along the outer periphery of the holding module 20A. Spherical portions 201A and 202A are provided at the first drive point D1 and the second drive point D2, which are apart in different first and second directions from the axial point 22A that is one point along the outer periphery of the holding module 20A. FIG. 6 illustrates the convex portions 201A and 202A as being apart from the holding module 20A, for easily understanding of the shape of each of the composing members. However, the convex portions 201A and 202A are incorporated into the holding module 20A, as illustrated in FIG. 6. Components constituting the first drive point D1 and the second drive point D2 are adapted to optionally receive driving forces from the first drive mechanism 23A and the second drive mechanism 24A, while catching the holding module 20A which swings, and to enable the holding module 20A to swing. FIG. 6 illustrates that shafts, each of which has the convex portion 201A at an end portion thereof, are passed through the hollow portions of the compression springs SP1 and SP2 of the holding module 20A and are incorporated into the holding module 20A.

The support member 21A for supporting the holding module 20A has the support portion 210A. Also, the support member 21A has the first wing portion 211A and the second wing portion 212A, which are interposed by the support portion 210A and extend in the first and second directions and which support the first drive mechanism 23A and the second drive mechanism 24A, respectively. A concave surface adapted to receive the convex portion, which is the axial point 22A of the holding module 20A, is provided in the support portion 210A. The connecting rod EN0 is passed through both holes 231H1 and 241H1 provided in one of the two arms 231A and 241A. The connecting rods EN1 and EN2 are passed through holes 231H2 and 241H2 provided in the opposite end portions of the two arms 231A and 241A, respectively. Thus, as illustrated in FIG. 4, the holding module 20 is supported swingably with respect to the support member 21A. In addition to the holes 231H2 and 241H2 through which the connecting rods EN1 and EN2 pass, concave portions 2311A and 2411A connecting to the convex portions of the drive points D1 and D2 of the holding module 20A are provided in the opposite end portions of the two arms 231A and 241A, respectively. The convex portions 201A and 202A of the holding module engage with the concave portions 2311A and 2411A and constitute the drive points D1 and D2. Consequently, the holding module 20A can be swung around the axial point 22A by driving the holding module 20A through the drive points D1 and D2 independent of each other.

That is, the two arms 231A and 241A are moved in the direction of the optical axis by energizing the coil 234A and 244A in a state in which the coils 234A and 244A are attached to the two arms 231A and 241A, respectively, and in which the concave portions 2311A and 2411A of the two arms 231A and 241A are connected to the convex portions 201A, and 202A, respectively. Consequently, the holding module 20A swings around the axial point 22A.

In a case where the position of the coil substrate 234A is unknown when the coil substrate 234A and the arm 231A are moved in the direction of the optical axis by the interaction between a magnetic field, which is generated by energizing the coil substrate 234A of the image blurring correction unit 2A, and a magnetic field formed by the magnet 233A in this example, even in a case where a control portion at the side of a digital camera cannot achieve good control of camera shake using the image blurring correction unit 2A. Thus, the accurate control of the position of the holding module 20A is enabled by providing a position detecting hall element 2341A on the coil substrate 234A.

Meanwhile, it is necessary to configure the image blurring correction unit 2A shown in FIG. 4 to prevent the holding module 20A from being disengaged from the support member 21A due to the disengagement between the convex portion and the concave portion at each of the drive points D1 and D2, which is caused, for example, when the digital camera shown in FIGS. 1 and 2 is dropped. Or else, the image blurring correction unit is disabled to operate. Consequently, camera shake correction cannot be performed.

It is also necessary to prevent the flexible substrate 200A from being disengaged from the sensor substrate 201A due to stress which is caused by the swing of the holding module 20A according to the way of drawing the flexible substrate 200A from the sensor substrate 201A of the holding module 20A and which is applied to the flexible substrate 200A. Or else, when an electrical signal is supplied from the control portion to the correction unit, no electrical signal is transmitted to the image blurring correction unit, so that the image blurring correction unit is brought into an inoperative condition.

Accordingly, a method of drawing the flexible substrate 200A is elaborated in the image blurring correction unit 2A shown in FIG. 4. Also, the image blurring correction unit 2A employs a structure, to which movement regulating members 202A and 203A are added, so as to prevent the holding module 20A from being dropped out of the support member 21A.

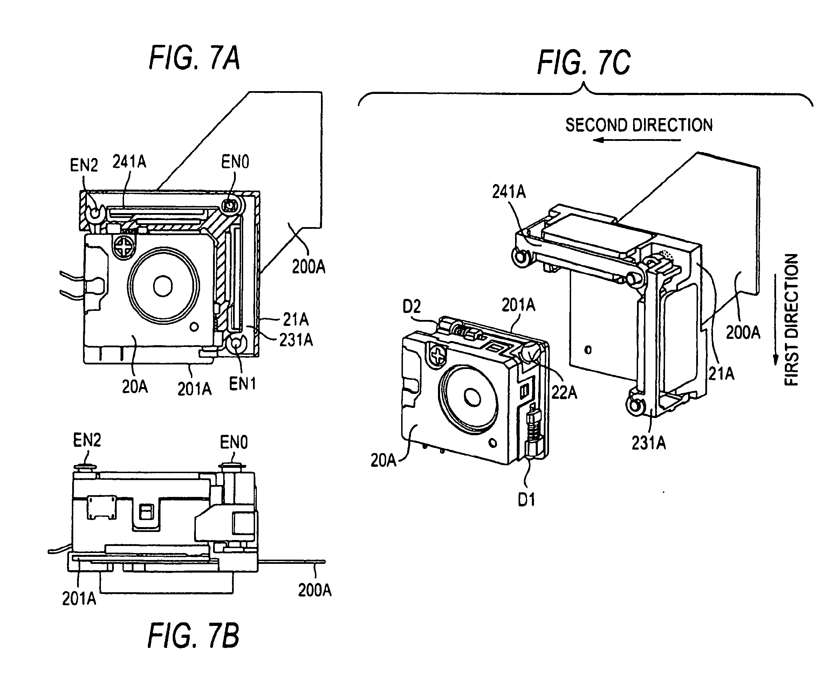

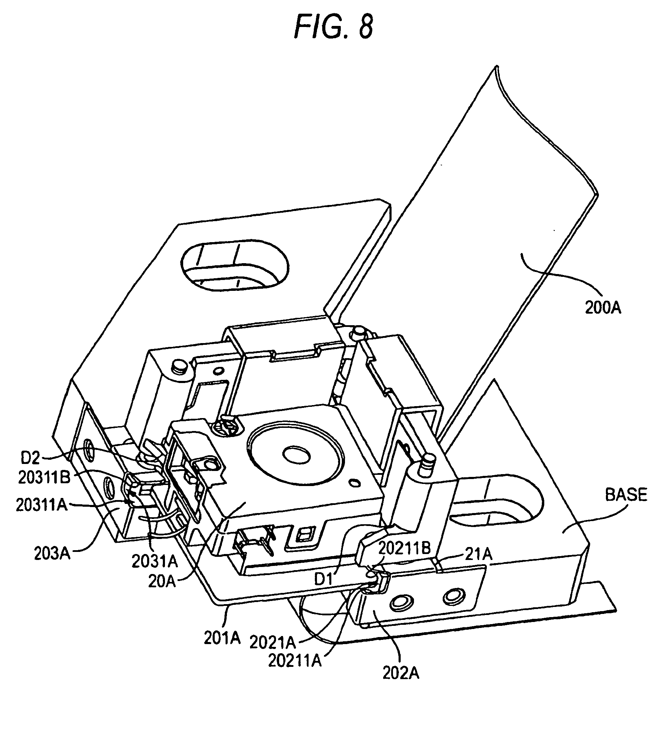

FIGS. 7A to 7C are explanatory views illustrating how the flexible substrate 200A is drawn out of the holding module 20A. FIG. 8 is a perspective view illustrating, from frontwardly and obliquely above, a state in which the support member 21A provided in the image blurring correction unit 2A of the configuration illustrated in FIGS. 7A to 7C is fixed to the support portion BASE in a portable device.

FIG. 7A is a view illustrating, from frontwardly above, the image blurring correction unit 2A. FIG. 7B is a view illustrating, from side, the image blurring correction unit 2A. FIG. 7C illustrates a state before the holding module 20A is incorporated into the support member 21A.

First, it is described below how the way of drawing out the flexible substrate 200A is elaborated.

The shape illustrated in FIG. 7A is obtained by causing the spherical convex portion, which is formed at the axial point 22A of the holding module 20A illustrated in FIG. 7C, to be contacted and engaged with the concave surface formed on the support portion of the supporting member 21A.

As described above, the sensor substrate 201A is provided in the holding module 20A shown in FIG. 7A. The flexible substrate 200A is drawn out of the sensor substrate 201A. FIG. 7B illustrates a state before the flexible substrate 200A is connected to the connecting portion of the sensor substrate 201A provided on the rear surface side of the holding module 20A.

As illustrated in FIG. 7C, the flexible substrate 200A is connected to the sensor substrate 201A at an end thereof. At least a first part extending from the sensor substrate 201A extends outwardly from the holding module 20A in a direction oblique to both first and second directions.

The first drive point D1 and the second drive point D2 are formed at places so that a second axis connecting the first drive point D1 to the axial point 22A intersects with a first axis connecting the second drive point D2 to the axial point 22A at an angle of substantially 90°. The first part of the flexible substrate 200A, which has first extended from the sensor substrate, extends outwardly from the holding module 20A in a direction inclined at an angel of substantially 45° to both of the first and second directions.

Thus, the flexible substrate 200A can be drawn obliquely from the vicinity of the axial point 22A, which is a lowest swinging point. Thus, even when the holding module 20A swings, the stress applied to the flexible substrate 200A is reduced. A trouble, in which the connecting portion between the flexible substrate 200A and the sensor substrate 201A is disengaged, is hard to occur. Additionally, the disengagement of the connection portion between this substrate and the control portion provided in the portable device, into which the image blurring correction unit is incorporated, is hard to occur.

Additionally, the image blurring correction unit 2Aillustrated in FIG. 7A is incorporated into the digital camera shown in FIGS. 1 and 2. In a case where the support member 21A is fixed to the support portion BASE provided in the portable device such as a digital camera, as illustrated in FIG. 8, the movement regulating members 202A and 203A, which respectively have cutout portions 2021A and 2031A shown in FIG. 8, are fastened to side surfaces of the support member 21A and the support portion BASE with screws so as to prevent the image blurring correction unit 1A from being disengaged from the support member 21 and the support portion BASE when the digital camera is dropped.

In this example, each of the cutout portions 2021A and 2031A of the movement regulating members 202A and 203A restricts a range, in which the holding module 20A moves in the direction of the optical axis, within a range in which the convex portion and the concave portion provided at an associated one of the first drive point D1 and the second drive point D2 maintain the engagement therebetween.

For example, when the holding module 20A is going to be dropped downwardly as viewed in FIG. 8, the movement of the holding module 20A is restricted by the bottom surface sides 20211A and 20311A of the cutout portions 2021A and 2031A. Thus, the holding module 20A is prevented from being disengaged from the support member 21A and the support portion BASE. Conversely, when the holding module is going to be disengaged upwardly as viewed in FIG. 8, the movement of the holding module 20A is restricted by the top surface sides 20211B and 20311B of the cutout portions 2021A and 2031A of the movement regulating members 202A and 203A. Consequently, the holding module 20 is prevented frombeing disengaged from the support member 21A and the support portion BASE.

That is, even when the digital camera shown in FIGS. 1 and 2, in which the image blurring correction unit shown in FIG. 8 is incorporated, is dropped, the engagement between the convex portion and the concave portion formed at each of the drive points D1 and D2 is maintained by the cutout portions 2021A and 2031A of the movement regulating members 202A and 203A. Consequently, the holding module 20A is prevented from being disengaged from the support member 21A and the support portion BASE. Thus, immediately after the dropped digital camera is picked up, an image of an object can be taken by this digital camera while performing image blurring correction.

Finally, operations of turning in the yawing direction and the pitching direction of the image blurring correction unit are described below.

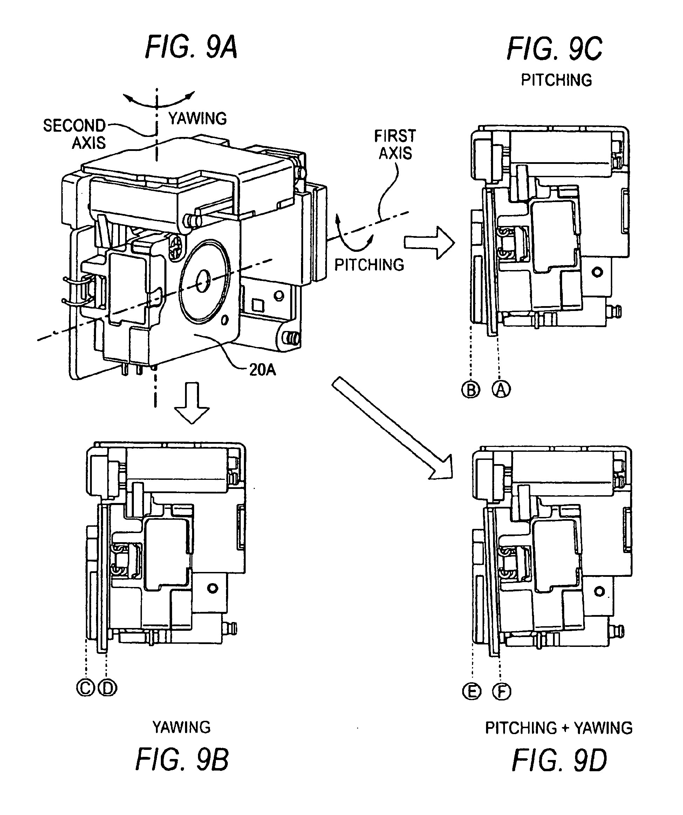

FIGS. 9A, 9B, 9C, and 9D are views illustrating an operation of the image blurring correction unit.

FIG. 9A is a perspective view illustrating, from frontwardly and obliquely above, the image blurring correction unit. FIG. 9B is a view illustrating the holding module 20A driven in the yawing direction by the second drive mechanism 24A, which is taken from the left side, as viewed in the perspective view illustrated in FIG. 9A. FIG. 9C is a view illustrating the holding module 20A driven in the pitching direction by the first drive mechanism 23A, which is taken from the left side, as viewed in the perspective view illustrated in FIG. 9A. FIG. 9D is a view illustrating the holding module 20A driven in both the yawing direction and the pitching direction by the first drive mechanism 23A and the second drive mechanism 24A, which is taken from the left side, as viewed in the perspective view illustrated in FIG. 9A.

As illustrated in FIG. 9A, the holding module 20A is swingably supported by the first drive mechanism 23A and the second drive mechanism 24A, which are supported by the support member 21A.

For example, in a case where neither the first drive mechanism 23A nor the second drive mechanism 24A does not drive the holding module, a side A of the support member 21A and a side B of the sensor substrate 201A are substantially parallel to each other.

When the holdingmodule 20A is driven by the first drive mechanism 23A, the holding module 20A is turned and inclined, as illustrated in FIG. 9C. In a case where this state is viewed from the left side, as viewed in FIG. 9A, inclination is caused between the side A of the holding module 20A and the side B of the support member 21A.

When the holding module 20A is driven by the second drive mechanism 24A, the holding module 20A is inclined toward the yawing direction. In a case where this state is viewed from the left side, as viewed in FIG. 9A, the distance between a side C (i.e., a side perpendicular to the side A) of the holding module 20A, as illustrated in FIG. 9B, and a side D (i.e., a side perpendicular to the side B) of the support member 21A is increased, while the sides C and D are maintained to be parallel to each other.

When the holding module 20A is driven by both the drive mechanism 23A and 24A simultaneously, the holding module 20A is turned around the first axis and is also turned around the second axis, as illustrated in FIG. 9D, so that the holding module 20A is inclined to both the first axis and the second axis illustrated in FIG. 9A. FIG. 9D cannot successfully illustrate this state. As shown in FIG. 9D, inclination is caused between a side E of the support member and a side F of the holding module 20A. This indicates that this state is the same as a state in which the holding module 20A is inclined in the pitching direction.

That is, according to the image blurring correction unit 2A, the holding module 20A is driven by the first drive mechanism 23A and the second drive mechanism 24A. Consequently, the holdingmodule 20A can be set in any position.

In a case where such an image blurring correctionunit is provided in, for example, in an imaging apparatus, the holding module is driven so that no matter what the camera shake is, the camera shake is corrected. Consequently, a clear image, which has no blurring, can be obtained.

Finally, the case of applying the image blurring correction unit to a camera-equipped cell-phone is described below.

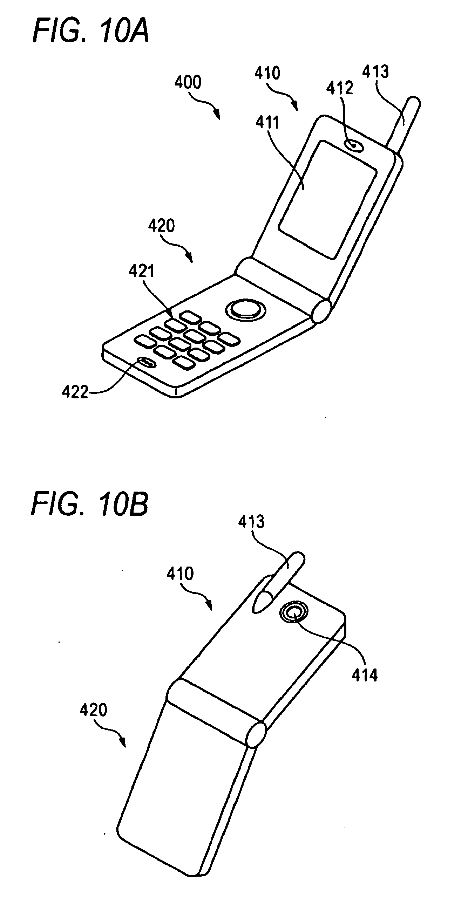

FIGS. 10A and 10B are views illustrating an example of the configuration of the camera-equipped cell-phone 400 to which the image blurring correction unit 2A is applied.

FIG. 10A is a perspective view illustrating a surface of the cell-phone 400. FIG. 10B is a perspective view illustrating a rear surface of the cell-phone 400.

The configuration of the camera-equipped cell-phone 400 is briefly described with reference to FIGS. 10A and 10B.

The cell-phone 400 illustrated in FIGS. 10A and 10B includes an upper portion 410 and a lower portion 420. The cell-phone 400 is of the collapsible type.

The upper portion 410 of the cell-phone 400 has a display screen 411, a mouthpiece 412, an antenna 413, and a camera imaging lens 414 provided in the rear surface thereof (see FIG. 10B). Operation keys 421 and an earpiece 422 are provided in the lower portion 420.

The image blurring correction unit 2A illustrated in FIGS. 1 to 9D is incorporated into a part provided with the camera imaging lens 414 illustrated in FIG. 10B. The image blurring correction unit according to the invention is applied to such a portable device of a compact thin type structure.

As described above, according to the invention, an image blurring correction unit can be implemented, which reduces stress applied to a flexible substrate that is drawn out therefrom and that is connected to the sensor substrate. Also, an image blurring correction apparatus having such an image blurring correction unit is implemented. Additionally, an imaging apparatus having such an image blurring correction apparatus is implemented.

Incidentally, in the foregoing description of the aforementioned embodiment, the case of applying the image blurring correction apparatus to the imaging apparatus has been described. However, it is apparent that the image blurring correction apparatus can be mounted in other optical apparatuses, such as a projecting apparatus and a copying machine, into each of which an optical system is incorporated. Elastic members according to the invention are not limited to the aforementioned springs. Other stretchable members can be employed as the elastic members.

According to the image blurring correction apparatus of the invention, an image blurring correction unit, whose size is further reduced by eliminating an outer frame, is implemented. Also, an image blurring correction having such an image blurring correction unit is implemented. Additionally, an imaging apparatus having such an image blurring correction apparatus is implemented.

## Claims

1. An image blurring correction unit (2A) comprising:
a holding module (20A) that holds a lens (10);
a support member (21A) having a support portion (210A) that holds the holding module at an axial point (22A) so as tobe swingable about this point in any directions, the axial point being one point along an outer periphery of the holding module; and
two drive mechanisms (23A, 24A) that drive the holding module through first and second drive points (D1, D2), which are apart from the axial point (22A) in first and second directions differing from each other, respectively, the two drive mechanisms comprising: a first drive mechanism (23A) that turns the holding module (20A), through the first drive point (D1), around a first axis connecting the axial point (22A) to the second drive point (D2) ; and a second drive mechanism (24A) that turns the holding module, through the second drive point (D2), around a second axis connecting the axial point (22A) to the first drive point (D1),
**characterised in that** the support member (21A) further comprises a first wing portion (21A) and a second wing portion (212A) that are interposed by the support portion (210A) and extend in the first direction and the second direction, respectively, and that hold the first drive mechanism (23A) and the second drive mechanism (24A), respectively.

2. The image blurring correction unit according to claim 1,
wherein the holding module further holds an image sensor (30), the image sensor capturing light from an object and generating an image signal.

3. The image blurring correction unit according to claim 1,
wherein the first drive point (D1) and the second drive point (D2) are formed at locations so that the second axis connecting the first drive point to the axial point (22A) intersects with the first axis connecting the second drive (D2) point to the axial point at an angle of substantially 90°.

4. The image blurring correction unit according to claim 1,
wherein each of the two drive mechanisms (23A, 24A) comprises: a magnet (233A, 243A) that forms a magnetic field; and a coil (234A, 244A) that is placed in the magnetic field and is energized to generate a force of turn-driving the holding module (20A).

5. The image blurring correction unit according to claim 1,
wherein the holding module (20A) has a spherical convex portion (201A, 202A) at the axial point (22A); and the support member (21A) has a spherical concave surface which is formed in the support portion (21A) and is adapted to receive the spherical convex portion.

6. The image blurring correction unit according to claim 1,
wherein the holding module (20A) has a spherical convex portion (201A) at each of the first drive point (D1) and the second drive point (D2),
each of the first drive mechanism (23A) and the second drive mechanism (24A) has a spherical concave portion (2311A;2411A) which receives an associated one of the convex portions (201A, 202A) respectively provided at the first drive point (D1) and the second drive point (D2), and
each of the first drive mechanism and the second drive mechanism provides a drive force to an associated one of the convex portions (201A, 202A) through an associated one of the concave portions (2311A, 2411A).

7. The image blurring correction unit according to claim 4,
wherein each of the magnets (233A, 243A) of the first drive mechanism (23A) and the second drive mechanism (24A) is fixedly supported by an associated one of the first wing portion (211A) and the second wing portion (212A),
each of the coils (234A, 244A) of the first drive mechanism and the second drive mechanism is supported, movably in a direction of an optical axis of the lens, by an associated one of the first wing portion and the second wing portion of the support member (21A), and
each of the coils is energized to generate a force acting in the direction of the optical axis.

8. An image blurring correction apparatus comprising:
the image blurring correction unit (2A) according to claim 1;
a blurring detection portion (300, 311, 312) that detects blurring; and
a blurring control portion (321, 322) that causes the two drive mechanisms (234A, 244A) to turn-drive the holding module (20A) according to a result of detection by the blurring detection portion.

9. An imaging apparatus (1) comprising the image blurring correction apparatus according to claim 8,
wherein the imaging apparatus (1) generates image data representing an image, in which blurring is reduced, by capturing light from an object and by causing the image blurring correction apparatus to operate.

## Patentansprüche

1. Bildunschärfekorrektureinheit (2A), umfassend:
ein Haltemodul (20A), das eine Linse (10) hält;
ein Stützglied (21A) mit einem Stützabschnitt (21 0A), der das Haltemodul bei einem Axialpunkt (22A) hält, so dass es in jeglicher Richtung um diesen Punkt schwenkbar ist, wobei der Axialpunkt ein Punkt entlang einem äußeren Randbereich des Haltemoduls ist; und
zwei Antriebsmechanismen (23A, 24A), die das Haltemodul über erste und zweite Antriebspunkte (D1, D2) antreiben, die von dem Axialpunkt (22A) in ersten und zweiten sich jeweils voneinander unterscheidenden Richtungen beabstandet sind; wobei die zwei Antriebsmechanismen umfassen: einen ersten Antriebsmechanismus (23A), der das Haltemodul (20A) über den ersten Antriebspunkt (D1) um eine erste Achse dreht, die den Axialpunkt (22A) mit dem zweiten Antriebspunkt (D2) verbindet, und einen zweiten Antriebsmechanismus (24A), der das Haltemodul über den zweiten Antriebspunkt (D2) um eine zweite Achse dreht, die den Axialpunkt (22A) mit dem ersten Antriebspunkt (D1) verbindet,
**dadurch gekennzeichnet, dass** das Stützglied (21A) weiterhin einen ersten Flügelabschnitt (211A) und einen zweiten Flügelabschnitt (212A) umfasst, zwischen denen sich der Stützabschnitt (210A) befindet, und die sich in der ersten bzw. der zweiten Richtung erstrecken, und die den ersten Antriebsmechanismus (23A) bzw. den zweiten Antriebsmechanismus (24A) halten.

2. Bildunschärfekorrektureinheit nach Anspruch 1,
wobei das Haltemodul weiterhin einen Bildsensor (30) hält, wobei der Bildsensor Licht von einem Objekt erfasst und ein Bildsignal generiert.

3. Bildunschärfekorrektureinheit nach Anspruch 1,
wobei der erste Antriebspunkt (D1) und der zweite Antriebspunkt (D2) an solchen Stellen ausgebildet sind, dass die zweite Achse, die den ersten Antriebspunkt mit dem Axialpunkt (22A) verbindet, die erste Achse, die den zweiten Antriebspunkt (D2) mit dem Axialpunkt verbindet, unter einem Winkel von ungefähr 90° kreuzt.

4. Bildunschärfekorrektureinheit nach Anspruch 1,
wobei jeder der beiden Antriebsmechanismen (23A, 24A) umfasst: einen Magnet (233A, 243A), der ein Magnetfeld bildet; und eine Spule (234A, 244A), die in dem Magnetfeld platziert ist und energetisiert ist, um eine Drehantriebskraft des Haltemoduls (20A) zu erzeugen.

5. Bildunschärfekorrektureinheit nach Anspruch 1,
wobei das Haltemodul (20A) einen sphärisch konvexen Abschnitt (201 A; 202A) bei dem Axialpunkt (22A) besitzt; und das Stützglied (21A) eine sphärisch konkave Oberfläche besitzt, die in dem Stützabschnitt (210A) gebildet wird und eingerichtet ist, den sphärisch konvexen Abschnitt aufzunehmen.

6. Bildunschärfekorrektureinheit nach Anspruch 1,
wobei das Haltemodul (20A) einen sphärisch konvexen Abschnitt (201A) bei jedem des ersten (D1) und des zweiten Antriebspunkts (D2) besitzt;
jeder des ersten Antriebsmechanismus (23A) und des zweiten Antriebsmechansimus (24A) einen sphärisch konkaven Abschnitt (2311A, 2411A) besitzt, der einen zugehörigen der konvexen Abschnitte (201A, 202A) aufnimmt, der bei dem ersten Antriebspunkt (D1) bzw. dem zweiten Antriebspunkt (D2) bereitgestellt sind; und
jeder des ersten Antriebsmechanismus und des zweiten Antriebsmechanismus einem zugehörigen der konvexen Abschnitte (201 A, 202A) über einen zugehörigen der konkaven Abschnitte (2311A, 2411A) eine Antriebskraft bereitstellt.

7. Bildunschärfekorrektureinheit nach Anspruch 4,
wobei jeder der Magnete (233A, 243A) des ersten Antriebsmechanismus (23A) und des zweiten Antriebsmechanismus (24A) durch einen zugehörigen des ersten Flügelabschnitts (211A) und des zweiten Flügelabschnitts (212A) fixiert gestützt wird;
jede der Spulen (234A, 244A) des ersten Antriebsmechanismus und des zweiten Antriebsmechanismus durch einen zugehörigen des ersten Flügelabschnitts und des zweiten Flügelabschnitts des Stützglieds (21A) in einer Richtung einer optischen Achse der Linse beweglich gestützt ist; und
jede der Spulen energetisiert ist, um eine Kraft zu erzeugen, die in der Richtung der optischen Achse wirkt.

8. Bildunschärfekorrekturvorrichtung, umfassend
die Bildschärfekorrektureinheit (2A) nach Anspruch 1;
einen Unschärfedetektionsabschnitt (300, 311, 312) der Unschärfe detektiert; und
einen Unschärfekontrollabschnitt (311, 322) der bewirkt, dass die beiden Antriebsmechanismen (234A, 244A) das Haltemodul (20A) gemäß einem Detektionsergebnis des Unschärfedetektionsabschnitts in Drehrichtung antreiben.

9. Bildgebungsvorrichtung (1), umfassend die Bildunschärfekorrekturvorrichtung nach Anspruch 8,
wobei die Bildgebungsvorrichtung (1) durch Erfassen von Licht von einem Objekt und durch Bewirken, dass die Bildunschärfekorrekturvorrichtung arbeitet, Bilddaten generiert, die ein Bild, in dem Unschärfe reduziert ist, darstellen.

## Revendications

1. Unité de correction de flou d'image (2A) comprenant :
un module de maintien (20A) qui supporte une lentille (10) ;
un élément de support (21A) comportant une partie de support (210A) qui supporte le module de maintien au niveau d'un point axial (22A) de manière à pouvoir être basculé autour de ce point dans des directions quelconques, le point axial étant un point le long d'une périphérie extérieure du module de maintien ; et
deux mécanismes d'entraînement (23A, 24A) qui entraînent le module de maintien par l'intermédiaire de premier et deuxième points d'entraînement (D1, D2), qui sont espacés du point axial (22A) dans des première et deuxième directions qui diffèrent l'une de l'autre, respectivement, les deux mécanismes d'entraînement comprenant : un premier mécanisme d'entraînement (23A) qui fait tourner le module de maintien (20A), par l'intermédiaire du premier point d'entraînement (D1), autour d'un premier axe reliant le point axial (22A) au deuxième point d'entraînement (D2) ; et un deuxième mécanisme d'entraînement (24A) qui fait tourner le module de maintien, par l'intermédiaire du deuxième point d'entraînement (D2), autour d'un deuxième axe reliant le point axial (22A) au premier point d'entraînement (D1),
**caractérisée en ce que** l'élément de support (21A) comprend en outre une première partie latérale (211A) et une deuxième partie latérale (212A) entre lesquelles la partie de support (210A) est interposée et qui s'étendent dans la première direction et la deuxième direction, respectivement, et qui maintiennent le premier mécanisme d'entraînement (23A) et le deuxième mécanisme d'entraînement (24A), respectivement.

2. Unité de correction de flou d'image selon la revendication 1,
dans laquelle le module de maintien supporte en outre un capteur d'image (30), le capteur d'image capturant la lumière provenant d'un objet et générant un signal d'image.

3. Unité de correction de flou d'image selon la revendication 1,
dans laquelle le premier point d'entraînement (D1) et le deuxième point d'entraînement (D2) sont formés à des emplacements de sorte que le deuxième axe reliant le premier point d'entraînement au point axial (22A) croise le premier axe reliant le deuxième point d'entraînement (D2) au point axial selon un angle d'environ 90°.

4. Unité de correction de flou d'image selon la revendication 1,
dans laquelle chacun des deux mécanismes d'entraînement (23A, 24A) comprend : un aimant (233A, 243A) qui forme un champ magnétique ; et une bobine (234A, 244A) qui est placée dans le champ magnétique et qui est alimentée pour générer une force d'entraînement en rotation du module de maintien (20A).

5. Unité de correction de flou d'image selon la revendication 1,
dans laquelle le module de maintien (20A) comporte une partie convexe sphérique (201A ; 202A) au niveau du point axial (22A) ; et l'élément de support (21A) comporte une surface concave sphérique qui est formée dans la partie de support (210A) et qui est adaptée pour recevoir la partie convexe sphérique.

6. Unité de correction de flou d'image selon la revendication 1,
dans laquelle le module de maintien (20A) comporte une partie convexe sphérique (201A) au niveau de chacun du premier point d'entraînement (D1) et du deuxième point d'entraînement (D2) ;
chacun du premier mécanisme d'entraînement (23A) et du deuxième mécanisme d'entraînement (24A) comporte une partie concave sphérique (2311A ; 2411A) qui reçoit une partie associée parmi les parties convexes (201A ; 202A) respectivement prévues au niveau du premier point d'entraînement (D1) et du deuxième point d'entraînement (D2) ; et
chacun du premier mécanisme d'entraînement et du deuxième mécanisme d'entraînement fournit une force d'entraînement à une partie associée parmi les parties convexes (201A ; 202A) par l'intermédiaire d'une partie associée parmi les parties concaves (2311A ; 2411A).

7. Unité de correction de flou d'image selon la revendication 4,
dans laquelle chacun des aimants (233A, 243A) du premier mécanisme d'entraînement (23A) et du deuxième mécanisme d'entraînement (24A) est supporté fixement par une partie associée parmi la première partie latérale (211A) et la deuxième partie latérale (212A) ;
chacune des bobines (234A, 244A) du premier mécanisme d'entraînement et du deuxième mécanisme d'entraînement est supportée, de manière mobile dans une direction d'un axe optique de la lentille, par une partie associée parmi la première partie latérale et la deuxième partie latérale de l'élément de support (21A) ; et
chacune des bobines est alimentée pour générer une force agissant dans la direction de l'axe optique.

8. Dispositif de correction de flou d'image comprenant :
l'unité de correction de flou d'image (2A) selon la revendication 1 ;
une partie de détection de flou (300, 311, 312) qui détecte un flou ; et
une partie de contrôle de flou (321, 322) qui amène les deux mécanismes d'entraînement (134A, 234A) à entraîner en rotation le module de maintien (20A) en fonction d'un résultat de détection de la partie de détection de flou.

9. Dispositif de formation d'image (1) comprenant le dispositif de correction de flou d'image selon la revendication 8,
dans lequel le dispositif de formation d'image (1) génère des données d'image représentant une image, dans laquelle le flou est réduit, en capturant la lumière provenant d'un objet et en amenant le dispositif de correction de flou d'image à fonctionner.
